(19) Europäisches Patentamt
European Patent Office
Office européen des brevets

(11) **EP 4 775 714 A1**

(12) **EUROPEAN PATENT APPLICATION**
published in accordance with Art. 153(4) EPC

(43) Date of publication:
**15.07.2026 Bulletin 2026/29**

(21) Application number: **24946565.9**

(22) Date of filing: **04.11.2024**

(51) International Patent Classification (IPC):
*C25D 1/04* (2006.01)     *C25D 3/38* (2006.01)
*H01M 4/66* (2006.01)     *H01M 10/052* (2010.01)

(86) International application number:
**PCT/CN2024/129788**

(87) International publication number:
**WO 2026/091151 (07.05.2026 Gazette 2026/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Jiujiang Defu Technology Co., Ltd
Jiujiang, Jiangxi 332005 (CN)**

(72) Inventors:
• **ZHAN, Junxiong**
  **Jiujiang, Jiangxi 332000 (CN)**
• **LUO, Jia**
  **Jiujiang, Jiangxi 332000 (CN)**
• **CHU, Changshun**
  **Jiujiang, Jiangxi 332000 (CN)**
• **JIANG, Yang**
  **Jiujiang, Jiangxi 332000 (CN)**
• **WEN, Min**
  **Jiujiang, Jiangxi 332000 (CN)**
• **ZHOU, Xiangxiang**
  **Jiujiang, Jiangxi 332000 (CN)**

(74) Representative: **Canzler & Bergmeier
Patentanwälte
Partnerschaft mbB
Despag-Straße 6
85055 Ingolstadt (DE)**

(54) **COPPER FOIL AND PREPARATION METHOD THEREFOR, LITHIUM BATTERY COPPER FOIL, CURRENT COLLECTOR, ELECTRODE SHEET, BATTERY AND ELECTRIC DEVICE**

(57)     The present disclosure relates to a copper foil, a preparation method thereof, a copper foil for a lithium-ion battery, a current collector, an electrode plate, a battery, and an electric device. The copper foil has a first surface and a second surface which are opposite to each other. Glossiness of the first surface is expressed as Gs1, and glossiness of the second surface is expressed as Gs2, where GS1 is greater than GS2, and a principal diameter of a fitted ellipse of the grain in a sectional crystal structure between the first surface and the second surface is expressed as $\Phi_{ED}$, $\Phi_{ED}$ satisfies: $\Phi_{ED} = * sqrt(a^2 + b^2)$, $\Phi_{ED}$ is 0.1 µm to 6.5 µm, and a and b are a major radius and a minor radius of the fitted ellipse, respectively. The copper foil has both high tensile strength and high elongation, thereby reducing breaking and wrinkling of the copper foil for the lithium-ion battery in the manufacturing process of the copper foil and the battery manufacturing and using process, and improving cycle performance and safety of the battery.

FIG. 1

EP 4 775 714 A1

**Description**

**FIELD OF DISCLOSURE**

The present disclosure relates to the technical field of batteries, in particular to a copper foil, a preparation method thereof, a copper foil for a lithium-ion battery, a current collector, an electrode plate, a battery, and an electric device.

**DESCRIPTION OF RELATED ARTS**

As a green energy storage device, a lithium battery has advantages of high energy density, excellent cycle performance, and high safety, which has become an indispensable support of electronic devices, power tools, large-scale energy storage, new energy vehicles, and other industries, and is an important basic technology to achieve "carbon peaking and carbon neutrality" goals.

A copper foil, as a carrier of negative active materials and a negative current collector providing the pathway for electron flow in a lithium-ion battery, is a key auxiliary material among the components of the lithium-ion battery. Depending on application fields, copper foils for lithium-ion batteries can be divided into two categories: copper foils for power batteries and copper foils for non-power batteries (such as 3C electronics, energy storage, etc.). Under background of global carbon emission reduction, the rapid development of new energy industries such as new energy vehicles and photovoltaic power generation has, in turn, driven a sharp increase in demand for copper foils for lithium-ion batteries.

With rapid updating and iteration of new energy technology and equipment electronic devices, higher requirements are also imposed on the performance and safety of lithium-ion batteries as the core energy storage system. Similarly, demand for high-performance copper foils for lithium batteries is intensified, in which tensile strength and elongation are important performance indicators of the copper foils for lithium batteries, but it is difficult for conventional copper foils for lithium batteries to have both high tensile strength and high elongation. Therefore, it is urgent to develop a copper foil with both high tensile strength and high elongation.

**SUMMARY OF THE PRESENT INVENTION**

On this basis, a copper foil, a preparation method thereof, a copper foil for a lithium-ion battery, a current collector, an electrode plate, a battery, and an electric device are provided in the present disclosure. The copper foil has both high tensile strength and high elongation, and can be used as a copper foil for a lithium-ion battery to improve the performance of the battery.

The technical scheme is as follows:

A copper foil has a first surface and a second surface which are opposite to each other. Glossiness of the first surface is expressed as Gs1, and glossiness of the second surface is expressed as Gs2, where GS1 is greater than GS2, and a principal diameter of a fitted ellipse of a grain in a sectional crystal structure between the first surface and the second surface is expressed as $\Phi_{ED}$, $\Phi_{ED}$ satisfies :

$$\Phi_{ED} = 2 * sqrt(a^2 + b^2),$$

and $\Phi_{ED}$ is 0.1 μm to 6.5 μm;

where a and b are a major radius and a minor radius of the fitted ellipse, respectively.

In one of embodiments, uniformity of a grain structure in the copper foil is expressed as $\Gamma_{GM}$, $\Gamma_{GM}$ satisfies:

$$\Gamma_{GM} = \sum_{i=1}^{n} \frac{\pi ab}{2n(\pi b + 2a - 2b)},$$

and $\Gamma_{GM}$ is 0.04 μm to 0.30 μm;
where n is the number of grains.

In one of the embodiments, a proportion of twin boundaries in the grain structure of the copper foil is 55% to 75%.

In one of the embodiments, a proportion of twinned grain regions in the grain structure of the copper foil is greater than or equal to 95%.

In one of the embodiments, the tensile strength of the copper foil is 30 kgf/mm$^2$ to 40 kgf/mm$^2$ at room temperature.

In one of the embodiments, the elongation at break of the copper foil is greater than or equal to 8% at room temperature.

In one of the embodiments, a numerical ratio of Vickers hardness to elongation at break of the copper foil is expressed as $\psi$, where $\psi$ is smaller than 10.

A preparation method of the copper foil as described above is further provided in the present disclosure, with a technical scheme as follows.

The preparation method of the copper foil as described above includes:

preparing the copper foil by an electrolytic method, in which an electrolyte solution adopted in the electrolytic method includes the following components:

70 g/L to 110 g/L of copper ions, 90 g/L to 130 g/L of sulfuric acid, 10 ppm to 30 ppm of chloride ions, 10 ppm to 90 ppm of a brightener, 2 ppm to 25 ppm of a leveling agent, and 1 ppm to 40 ppm of a throwing agent.

The brightener includes a compound with a sulfur-containing group, the leveling agent includes a nitrogen-containing compound, and the throwing agent includes a polyether compound and a nitrogen-containing heterocyclic compound.

In one of the embodiments, the compound with the sulfur-containing group includes one or more of bis-(sodium sulfopropyl)-disulfide, sodium 3-mercapto-1-propanesulphonate, isothiourea-propane sulfonate, and sodium 3-(benzothiazol-2-ylthio)-1-propanesulfonate.

In one of the embodiments, the nitrogen-containing compound includes one or more of collagen, gelatin, 2-amino-4-methylbenzothiazole, and 2-mercaptopyridine.

In one of the embodiments, the throwing agent includes the polyether compound and the nitrogen-containing heterocyclic compound in a concentration ratio of 1: (1 to 5).

In one of the embodiments, the polyether compound includes one or more of polyethylene glycol and polypropylene glycol.

In one of the embodiments, a molecular weight of polyethylene glycol is 4000 to 8000.

In one of the embodiments, the nitrogen-containing heterocyclic compound includes polyvinylpyrrolidone.

In one of the embodiments, a temperature of the electrolyte solution is 40°C to 70 °C.

In one of the embodiments, an applied current is 15,000 to 60,000 A during an electrolytic process.

Use of the copper foil as described above is further provided in the present disclosure, with a technical scheme as follows.

A copper foil for a lithium-ion battery includes the copper foil as described above or a copper foil prepared according to the preparation method of the copper foil as described above.

In one of the embodiments, the copper foil for the lithium-ion battery further includes a first passivation layer and a second passivation layer. The first passivation layer is arranged on the first surface of the copper foil, and the second passivation layer is arranged on the second surface of the copper foil.

In one of the embodiments, the first passivation layer and the second passivation layer independently include one or more of chromic anhydride, glucose, and nitride, respectively.

A current collector, includes the copper foil for the lithium-ion battery as described above.

An electrode plate, includes the current collector as described above.

A battery, includes the electrode plate as described above.

An electric device, includes the battery as described above.

The present disclosure at least has the following beneficial effects.

The principal diameter of the fitted ellipse of the grain in the sectional crystal structure of the copper foil is expressed as $\Phi_{ED}$, $\Phi_{ED}$ is less than 0.1 $\mu$m, the grain size is too small, grain boundary density increases, the tensile strength increases, but with decreased plastic deformation and decreased elongation. On the contrary, when $\Phi_{ED}$ is greater than 6.5 $\mu$m, the grain size is too large, the grain boundary density decreases, and it is difficult for the limited space in the crystal to accommodate extensive dislocation motion and pile-up, resulting in increase in internal stress and decrease in tensile strength, and meanwhile a risk of tearing and breakage in a process of manufacturing the copper foil and preparing the electrode plate is increased. The copper foil according to the present disclosure has $\Phi_{ED}$ of 0.1 $\mu$m to 6.5 $\mu$m, exhibiting significantly improvement in the elongation, so that the copper foil of the present disclosure has both high tensile strength and high elongation, which not only reduces phenomenon of breakage and/or wrinkling in a process of manufacturing the copper foil and/or in a process of manufacturing and using battery cells, but also improves cycle performance and safety of the battery.

**BRIEF DESCRIPTION OF THE DRAWINGS**

FIG. 1 is an EBSD photograph of a section of a copper foil prepared in Embodiment 1;

FIG. 2 is a photograph of hardness indentation on a first glossy surface (that is, a first surface or a deposition surface) of a copper foil prepared in Embodiment 2; and

FIG. 3 is an EBSD photograph of a section of a copper foil prepared in Comparative Embodiment 1.

## DETAILED DESCRIPTION OF THE PREFERRED EMBODIMENTS

In order to facilitate understanding of the present disclosure, the present disclosure will be described more comprehensively, and preferred embodiments of the present disclosure will be given in the following. However, the present disclosure can be implemented in many different forms and is not limited to the embodiments described herein. These embodiments are provided to make the present disclosure more thorough and comprehensive.

Unless otherwise defined, all technical and scientific terms used herein have the same meaning as commonly understood by those skilled in the art of the present disclosure. Terms used in the description of the present disclosure herein are only for the purpose of describing specific embodiments, and are not intended to limit the present disclosure. As used herein, the term "and/or" includes any and all combinations of one or more related listed items.

In a case of using words "including", "comprising", and "containing" described herein, it is intended to refer to non-exclusive inclusion. Unless explicitly limiting expressions such as "only" or "consisting of" are used, additional components may be further included.

The words "preferably" and "more preferably" in the present disclosure refer to embodiments of the present disclosure that can provide certain beneficial effects in some cases. However, other embodiments may be preferred under the same or other conditions. Furthermore, expression of one or more preferred embodiments does not imply that other embodiments are not available, nor is it intended to exclude other embodiments from the scope of the disclosure. That is, in the present disclosure, words "preferably", "more preferably", and the like are only intended to describe embodiments or examples with better effect, but do not constitute a limitation on the protection scope of the present disclosure.

In the present disclosure, words "further", "still further", "specially", and the like are used for descriptive purposes, indicating differences in content, and shall not be understood as limiting the protection scope of the present disclosure.

In the present disclosure, "at least one" indicates more than one, such as one, two, or more. "Multiple" or "several" refers to at least two, such as two, three, etc., and "multiple layers" refers to at least two layers, such as two layers, three layers, etc., unless otherwise specifically defined. In the description of the present disclosure, "several" means at least one, such as one, two, etc., unless otherwise specifically defined.

When a numerical range is disclosed herein, the range is regarded as continuous and includes the minimum and maximum values of the range and every value between the minimum and maximum values. Further, when a range is expressed in terms of integers, it is intended to include every integer between the stated minimum and maximum values. Further, when multiple ranges are provided to describe a feature or a characteristic, the ranges can be combined. In other words, unless otherwise indicated, all ranges disclosed herein are to be understood as including any and all subranges encompassed therein.

Unless otherwise specified, all of the steps of the present disclosure can be performed sequentially or randomly. For example, the method includes steps (a) and (b), which means that the method can include steps (a) and (b) performed in sequence, and can also include steps (b) and (a) performed in sequence. For example, the method can also involve step (c), which indicates that step (c) can be added to the method in any order. For example, the method can include these steps in an order of (a), (b) and (c), (a), (c) and (b), or (c), (a) and (b).

Unless otherwise indicated, a term in a singular form may include a plural form, and should not be understood as being limited to a single element.

In the present disclosure, both "greater than" and "less than" are inclusive of the recited value. For example, an expression "less than 1" includes 1.

In the present disclosure, the room temperature refers to 0°C to 40°C, including but not limited to 10°C to 40°C, or more particularly 20°C to 30°C.

Tensile strength and elongation are important performance indices of the copper foil for the lithium-ion battery. Conventional copper foils for the lithium-ion battery have a tensile strength of 300 MPa to 400 MPa, which is at a high level, but an elongation of only 4% to 8%. In the production process of a downstream lithium-ion battery, a requirement for a thinner copper foil and faster coating speed is proposed. Meanwhile, in a battery cell manufacturing process such as coating, rolling, and baking, the copper foil may be in a high temperature and high pressure environment. This requires the copper foil to have high elongation to prevent the occurrence of dents, wrinkles, or breakage, which would otherwise reduce production efficiency. In addition, expansion and contraction of active materials in the lithium-ion battery occurred during charging and discharging. The high-elongation copper foil can prevent the active materials from peeling off and cracking from the electrode sheet during contraction and expansion of an electrode plate caused by charging and discharging, thus increasing internal resistance and improving capacity, cycle life, and safety of the battery.

In view of the problem that it is difficult for conventional copper foil for lithium-ion battery to have both high tensile strength and high elongation, the present disclosure provides a copper foil with both high tensile strength and high elongation, which can be used as a copper foil for a lithium-ion battery to improve battery performance.

The technical scheme is as follows:

A copper foil has a first surface and a second surface which are opposite to each other. Glossiness of the first surface is expressed as Gs1, and glossiness of the second surface is expressed as Gs2, where GS1 is greater than GS2, and a principal diameter of a fitted ellipse of a grain in a sectional crystal structure between the first surface and the second surface is expressed as $\Phi_{ED}$, $\Phi_{ED}$ satisfies :

$$\Phi_{ED} = 2 * sqrt(a^2 + b^2),$$

and $\Phi_{ED}$ is 0.1 $\mu$m to 6.5 $\mu$m;

where a and b are a major radius and a minor radius of the fitted ellipse, respectively.

In a case where a principal diameter of a fitted ellipse of a grain in a sectional crystal structure between surfaces of the copper foil is less than 0.1 $\mu$m, the copper foil has a too small grain size, increased grain boundary density, increased strength, but with decreased plastic deformation and decreased elongation. As planar defects that are ubiquitous in polycrystalline materials, grain boundaries can act both as preferred sites for defect nucleation and as obstacles to defect motion. In metallurgy, the essence of grain-refinement strengthening lies in the interaction between grain boundaries and dislocations: grain boundaries impede dislocation motion, thereby increasing the strength while still maintaining good plastic deformability. This strengthening mechanism does not change the overall nature of the grain boundaries themselves; however, the structurally disordered character of grain boundaries makes it difficult for dislocations to slip along them. Nevertheless, there exists a critical grain size. When the grain size is reduced below this critical value, the grain boundaries suppress the activation of dislocation sources. As a consequence, the number of mobile dislocations available to accommodate deformation becomes insufficient, slip is impeded, and the material's plastic deformability is reduced. In addition, when the principal diameter of the fitted ellipse of the grain in a sectional crystal structure between surfaces of the copper foil is greater than 6.5 $\mu$m, the copper foil is with a too large grain size and decreased grain boundary density, so that it is difficult for the limited space in the crystal to accommodate extensive dislocation motion and pile-up, resulting in increase in internal stress and decrease in strength, and meanwhile a risk of tearing and breakage in a process of manufacturing and using the copper foil is increased. The copper foil according to the present disclosure is has $\Phi_{ED}$ of 0.1 $\mu$m to 6.5 $\mu$m, exhibiting significant improvement in the elongation of the copper foil, so that the copper foil has both high tensile strength and high elongation, which can reduce breakage and/or wrinkling of the copper foil in the process of manufacturing the copper foil and/or in the process of manufacturing and using battery cells.

Furthermore, some studies show that after fitting, the elongation of the copper foil is positively correlated with thickness, and cycle stability of the battery can be improved by about 5% for every 1% increase in the elongation at break of the copper foil. If the elongation of the copper foil can be further improved while its thickness is reduced, a new development pathway may be opened up for the copper foil and battery industry. According to a scheme of the present disclosure, the elongation of the copper foil is significantly improved, and then the cycle performance and safety of the battery are also significantly improved.

In one of embodiments, uniformity of a grain structure in the copper foil is expressed as $\Gamma_{GM}$, $\Gamma_{GM}$ satisfies:

$$\Gamma_{GM} = \sum_{i=1}^{n} \frac{\pi ab}{2n(\pi b + 2a - 2b)},$$

and $\Gamma_{GM}$ is 0.04 $\mu$m to 0.30 $\mu$m;
where n is the number of grains.

$\Gamma_{GM}$ is a ratio of an area to a circumference of the fitted ellipse of the grain in the sectional crystal structure of the copper foil, which can be used to quantify the morphology and the crystal structure of the grains. When metal materials are subjected to a tensile loading, in a process from elastic deformation to plastic deformation and to fracture, materials with an uniform crystalline structure may have similar tensile strength to those with a non-uniform crystalline structure, but metal materials with the non-uniform crystalline structure tend to fracture early during tensile deformation, that is, compared with the metal materials with the non-uniform crystalline structure, metal materials with the uniform crystalline structure have a longer tensile plateau region in their tensile stress-strain response. On one hand, because there are coarse grains and fine grains with largely different sizes in materials with the non-uniform crystalline structure, with increase in strain, low-angle grain boundaries in the coarse grains gradually develop, and lattice distortion in the regions adjacent to the coarse grains and the fine grains becomes more pronounced, while in the materials with uniform crystalline structure, with increase in strain, the amount of lattice distortion increases, but with relatively uniform distribution. Furthermore, with an increase in strain, the surface roughness in the fine-grained regions of the non-uniform microstructure gives rise to local stress concentrations. With further loading and increased slip activity, these roughened regions become more pronounced and tend to accumulate near the surfaces of coarse grains and in the vicinity of coarse-fine grain boundaries. In the uniform microstructure under tension, however, such roughened regions form in a more random and dispersed manner. Consequently, during deformation, those regions in the non-uniform crystalline structure where the microstructural contrast is greatest are more prone to strain localization and subsequent crack initiation, leading to earlier fracture. On the other hand, in materials with a uniform crystalline structure, the slip systems of neighboring grains are more compatible in terms of strain, and dislocations can be more readily transmitted across adjacent grains. In contrast, in the non-uniform crystalline structure, dislocations either cannot be effectively transmitted between certain grains or their motion is strongly impeded. Therefore, under the same macroscopic strain, dislocation motion on the two sides of some local regions in the non-uniform microstructure becomes asynchronous, and the ability to maintain strain compatibility varies strongly from place to place. This results in highly non-uniform deformation, strain incompatibility, and premature fracture, ultimately leading to a reduction in plastic deformability.

It is found that when the grain structure uniformity $\Gamma_{GM}$ of the sectional crystal structure of the copper foil is less than 0.04 $\mu$m, the grain-boundary surfaces become rough and uneven, which readily leads to stress concentration. At the same time, the increased grain boundary density suppresses the activation of dislocation sources, making slip difficult, thereby reducing the plastic deformability and resulting in a relatively low elongation. When the grain structure uniformity $\Gamma_{GM}$ of the sectional crystal structure of the copper foil section is larger than 0.30 $\mu$m, the grain size becomes relatively large, and the grain boundary density decreases. The internal stress within the crystal increases, while the space available to accommodate dislocations is limited, which in turn leads to a reduction in strength and causes tearing and strip breakage of the copper foil during manufacturing and service. $\Gamma_{GM}$ of the copper foil according to the present disclosure is 0.04 $\mu$m to 0.30 $\mu$m, including but not limited to 0.04 $\mu$m, 0.06 $\mu$m, 0.08 $\mu$m, 0.10 $\mu$m, 0.15 $\mu$m, 0.20 $\mu$m, 0.25 $\mu$m, or 0.30 $\mu$m, and the copper foil meeting this requirement has both high tensile strength and high elongation, and can avoid the phenomena of tearing and breakage of the copper foil during manufacturing and use.

Furthermore, in the crystal structure, twin grains are closely related to the mechanical properties of the metal materials. The twin grains can interact with dislocations at an interface, which can effectively hinder dislocation motion. Moreover, in face-centered cubic (FCC) close-packed metals, twin boundaries can act as active slip planes, so dislocations can glide not only within the matrix but also along the twin interfaces. In addition, coherent twin boundaries provide storage sites for dislocations generated during deformation, thereby effectively enhancing elongation of the copper foil.

In one of the embodiments, a proportion of twin boundaries in the grain structure of the copper foil is 55% to 75%, including but not limited to 55%, 60%, 65%, 70% or 75%, and the copper foil meeting this requirement has both high tensile strength and high elongation, and can avoid the phenomena of tearing and breakage of the copper foil during manufacturing and use.

In one of the embodiments, a proportion of twinned grain regions in the grain structure of the copper foil is greater than or equal to 95%, including but not limited to 95%, 96%, 97%, 98% or 99%, and the copper foil meeting this requirement has both high tensile strength and high elongation, and can avoid the phenomena of tearing and breakage of the copper foil during manufacturing and use.

In one of the embodiments, tensile strength of the copper foil is 30 kgf/mm$^2$ to 40 kgf/mm$^2$ at room temperature (such as 0°C to 40°C, further 10°C to 40°C, still further 25°C), including but not limited to, 30 kgf/mm$^2$, 32 kgf/mm$^2$, 34 kgf/mm$^2$, 36 kgf/mm$^2$, 38 kgf/mm$^2$, 40 kgf/mm$^2$, and the copper foil meeting this requirement can reduce phenomenon of breakage of the copper foil during a preparation process and a battery cell preparation process, improve efficiency of copper foil manufacturing and battery production, and improve capacity and safety performance of the battery.

In one of the embodiments, elongation at break of the copper foil is greater than or equal to 8% at room temperature (such as 0°C to 40°C, further 10°C to 40°C, still further 25°C), including but not limited to 8%, 10%, 12%, 15%, 18% or 20%. If the elongation at break of the copper foil is less than 8% and the copper foil is used as a current collector for the lithium-ion battery, and when the active material of the battery is a material with a high expansion rate, during a charging and discharging process of a lithium secondary battery, the electrode plate may crack or fracture due to insufficient elongation with expansion of the battery cells, which may increase the internal resistance and reduce capacity, cycle life and safety of the battery.

Furthermore, in view of the microstructure and deformation mechanism of materials, hardness is mainly determined by the barrier effect of grain boundaries and the resistance to dislocation motion in the metallic materials. If a ratio of Vickers hardness to the elongation at break of the copper foil is excessively high, the hardness of the metal material is high, interaction between the grain boundaries and the dislocations, together with the disordered structure of the grain boundaries make it difficult for the dislocations to glide along the grain boundaries, and increase the resistance to both grain-boundary and dislocation motion. Meanwhile, the grain boundaries inhibit the activation of dislocation sources, making it more difficult for the materials to undergo plastic deformation under stress, resulting in a decrease in elongation.

In one of the embodiments, Vickers hardness of the copper foil according to the present disclosure is above 40 Hv, and further, the Vickers hardness of the copper foil according to the present disclosure is above 45 Hv, with higher hardness and better wear resistance.

In one of the embodiments, a numerical ratio of the Vickers hardness to the elongation at break of the copper foil is expressed as $\psi$ (for example, when the Vickers hardness of the copper foil is 48.7 Hv and the elongation at break is 15.7%, $\psi$ is 48.7/15.7=3.1), where $\psi$ is smaller than 10, including but not limited to 1, 2, 3, 4, 5, 6, 7, 8 or 9, and the copper foil meeting this requirement has both high tensile strength and high elongation, and can avoid the phenomena of tearing and breakage of the copper foil during manufacturing and use.

In one of the embodiments, a thickness of the copper foil is 6 $\mu$m to 12 $\mu$m, further 8 $\mu$m to 10 $\mu$m. It can be understood that for an electrolytic copper foil, the thickness of the copper foil can be controlled by a current and a linear velocity in the preparation process.

It can be understood that a method for analyzing the sectional crystal structure of the copper foil in the present disclosure is not particularly limited, and conventional characterization analysis methods in this art can also be used. Optionally, the present disclosure adopts an electron backscattered diffraction (EBSD) test to characterize a grain structure of the copper foil according to the present disclosure, and further, adopts a C-Swift EBSD detector manufactured by Oxford Instruments in England to observe and characterize crystal structures of samples of various Embodiments and Comparative Embodiments. In order to clearly observe the grain boundary morphology of a sample, the cross section was polished for 20 minutes by an ion miller in advance. Further, n in $\Gamma_{GM} = \sum_{i=1}^{n} \frac{\pi ab}{2n(\pi b + 2a - 2b)}$ is a grain count on the copper-foil cross section detected by EBSD, which is, in one of the embodiments of the present disclosure, the total number of grains in an entire field of view at a magnification factor of 3,000$\times$, which can be directly measured and counted by Aztec Crystal software. In short, n is the total number of all of the grains observed in the field of view when examining the copper-foil cross section at 3000$\times$ magnification.

It can be understood that a method for testing the tensile strength and the elongation of the copper foil according to the present disclosure is not particularly limited, and conventional testing methods in this art can also be adopted. Optionally, in the embodiments of the present disclosure, a HY-0230 universal material testing machine manufactured by Shanghai Hengyi Precision Instrument Co., Ltd. was used to test the tensile strength and the elongation of the samples at room temperature and a strain rate of 50 mm/min according to the testing method of GB/T29847-2013.

It can be understood that the method for testing the Vickers hardness of the copper foil according to the present disclosure is not particularly limited, and conventional testing methods in this art can also be adopted. Optionally, in the embodiments of the present disclosure, the Vickers hardness (HV) is tested according to the GB/T 4340.1-2009 test method, and the Vickers hardness (HV) of the sample is tested at room temperature under a load of 50 g with a dwell time of 5 s using a touch screen micro Vickers hardness tester manufactured by SHANGHAI TASO TESTING INTRUMENT CO., LTD. Five different positions of the sample are measured, and their average value is taken as the final Vickers hardness (HV) of the sample.

A preparation method of the copper foil as described above is further provided in the present disclosure, with a technical scheme as follows.

The preparation method of the copper foil includes:

preparing the copper foil through an electrolytic method, in which an electrolyte solution adopted in the electrolytic method includes the following components:

70 g/L to 110 g/L of copper ions, 90 g/L to 130 g/L of sulfuric acid, 10 ppm to 30 ppm of chloride ions, 10 ppm to 90 ppm of a brightener, 2 ppm to 25 ppm of a leveling agent, and 1 ppm~40 ppm of a throwing agent.

The brightener includes a compound with a sulfur-containing group, the leveling agent includes a nitrogen-containing compound, and the throwing agent includes a polyether compound.

In the process of forming the copper foil by electrodeposition, due to different growth rates of respective crystal planes, the phenomenon of preferred orientation (texture) may occur. From a crystallographic point of view, it is generally believed that texture growth along a (220) plane is beneficial to the improvement of elongation. According to the present disclosure, an organic composite electrolyte additive is incorporated into the copper sulfate electrolyte so that the copper deposited during electroplating develops relatively large and uniform grains, which is also beneficial to the improvement of elongation. Specifically, in the present disclosure, a certain proportion of brightener, leveling agent, and throwing agent is added into the electrolyte (or a plating solution) as organic additives, which can change the deposition rate of the copper and improve the mechanical properties of the copper foil. The brightener is mainly composed of compounds with a sulfur-containing group, with the main function to promote nucleation of copper ions. The leveling agent is mainly composed of nitrogen-containing compounds, which can promote grain growth in the copper foil along close-packed planes, resulting in flatter grains. When a brightener of organic sulfide and a leveling agent of nitrogen-containing compounds (such as nitrogen-containing polymers) are used in combination, the crystalline structure of the copper foil becomes more uniform and compact, and a large number of nanocrystalline regions are generated, which enhances the grain-refinement strengthening effect. The favorable architectures of fine grains and nanoscale twins act synergistically, thereby improving the tensile strength of the copper foil while enhancing the elongation of the copper foil. The throwing agent is mainly composed of ether compounds and nitrogen-containing heterocyclic compounds, which can form a more stable and uniform barrier layer, thus effectively limiting copper crystal growth along certain crystallographic directions. When the throwing agent acts uniformly across the copper foil in conjunction with the other additives, it leads to finer and more homogeneous grains. In addition, the polyether compound can effectively inhibit the growth of grains at high temperature, reduce the size of grain nuclei, generate more interfaces, which absorb and release thermal stress, and thus improving the stability of the copper foil at high temperature. It can be understood that some of the compounds have multiple functions. For example, 2-amino-4-methylbenzothiazole can be used as both the leveling agent and the throwing agent.

In one of the embodiments, the compound with the sulfur-containing group includes one or more of bis-(sodium sulfopropyl)-disulfide (SPS), sodium 3-mercapto-1-propanesulphonate (MPS), isothiourea-propane sulfonate (UPS), and sodium 3-(benzothiazol-2-ylthio)-1-propanesulfonate (ZPS). Further, the brightener consists of bis-(sodium sulfopropyl)-disulfide and sodium 3-mercapto-1-propanesulphonate. Still further, the brightener consists of bis-(sodium sulfopropyl)-disulfide and sodium 3-mercapto-1-propanesulphonate with a concentration ratio of (0.5 to 3): 1.

In one of the embodiments, the nitrogen-containing compound includes one or more of collagen, gelatin, 2-amino-4-methylbenzothiazole, and 2-mercaptopyridine.

In one of the embodiments, the throwing agent consists of the polyether compound and the nitrogen-containing heterocyclic compound in a concentration ratio of 1: (1 to 5).

In one of the embodiments, the polyether compound includes one or more of polyethylene glycol (PEG) and polypropylene glycol (PPG). Further, a molecular weight of polyethylene glycol is 4000 to 8000.

In one of the embodiments, the nitrogen-containing heterocyclic compound is polyvinylpyrrolidone (PVP).

In one of the embodiments, the throwing agent at least includes polyethylene glycol. The throwing agent is composed of polyethylene glycol and the nitrogen-containing heterocyclic compound for use, which can form a more stable and uniform barrier layer, thus effectively limiting copper crystal growth along certain crystallographic directions. When the throwing agent acts uniformly across the copper foil in conjunction with the other additives, it makes the grains finer and more uniform, improving the uniformity of the grains, resulting in high tensile strength and high elongation of the copper foil, and avoiding the phenomena of tearing and breakage of the copper foil during manufacturing and use.

In one of the embodiments, a temperature of the electrolyte solution is 40°C to 70 °C.

In one of the embodiments, an applied current is 15,000 to 60,000 A during an electrolytic process.

In one of the embodiments, the preparation method of the copper foil as described above includes the following steps:

taking copper plates and/or copper wires with a purity of over 99.8% as raw materials, introducing high-temperature air, dissolving the raw materials in a sulfuric acid solution to prepare copper sulfate electrolyte solution, and obtaining a pure copper sulfate electrolyte solution by three-stage filtration; taking an insoluble material as an anode and a cathode roller with a roller surface made of titanium as a cathode, immersing a lower semicircular portion of the cathode roller in the copper sulfate electrolyte solution in an electrolytic cell, rotating the cathode roller at a constant speed and performing electrolysis, controlling the amount of copper electro-deposited on the surface on the cathode roller by adjusting a cathode current density and a rotation speed of the cathode roller; and continuously peeling the copper foil off the cathode roller after the copper foil is rolled out of a liquid level with a drum, subjecting the copper foil to passivation, drying and winding to generate a raw foil. The electrolyte solution contains the following components: 70 g/L to 110 g/L of copper ions, 90 g/L to 130 g/L of sulfuric acid, 10 ppm to 30 ppm of chloride ions, 10 ppm to 90 ppm of a brightener, 2 ppm to 25 ppm of a leveling agent, and 1 ppm~40 ppm of a throwing agent.

It can be understood that for the copper foil prepared by electrolysis, in a preparation process, a deposition surface with a relative higher glossiness is a matte surface (corresponding to the first surface described in the present disclosure), while a surface with a relative lower glossiness and in direct contact with a surface of the cathode roller is a shiny surface (corresponding to the second surface described in the present disclosure), that is, the matte surface has a higher glossiness than the shiny surface.

Use of the copper foil is further provided in the present disclosure, with a technical scheme as follows.

(1) A copper foil for a lithium-ion battery, which includes the copper foil as described above or a copper foil prepared according to the preparation method of the copper foil as described above. It can be understood that the copper foil for the lithium-ion battery has the advantages of the copper foil of the present disclosure, such as uniform and moderate grain size, both high tensile strength and high elongation, thereby reducing breaking and wrinkling of the copper foil for the lithium-ion battery in a manufacturing process of the copper foil and a battery manufacturing and using process, and improving cycle performance and safety of the battery.

In one of the embodiments, the copper foil for the lithium-ion battery further includes a first passivation layer and a second passivation layer. The first passivation layer is arranged on a first surface of the copper foil, and the second passivation layer is arranged on a second surface of the copper foil.

In one of the embodiments, the first passivation layer and the second passivation layer independently include one or more of chromic anhydride, glucose, and nitride, respectively. It can be understood that the first passivation layer and the second passivation layer are independent of each other, and thus, a material and a composition ratio of the first passivation layer can be the same as or different from those of the second passivation layer.

**(2)** A current collector, which includes the copper foil for the lithium-ion battery as described above. It can be understood that the current collector has the advantages of the copper foil for the lithium-ion battery of the present disclosure, and has both high tensile strength and high elongation, thereby reducing breaking and wrinkling of a battery cell in a manufacturing and using process, and improving cycle performance and safety of the battery. In one of the embodiments, the tensile strength of the current collector is 30 kgf/mm$^2$ to 40 kgf/mm$^2$, and the elongation of the current collector is more than or equal to 3% after the battery cell is cyclically charged and discharged.

(3) An electrode plate, which includes the current collector as described above. It can be understood that the electrode plate has the advantages of the current collector of the present disclosure, and has both high tensile strength and high elongation, thereby reducing breaking and wrinkling of a battery cell in the manufacturing and using process, and improving cycle performance and safety of the battery.

Further, the electrode plate includes a first active material layer, a current collector, and a second active material layer, which are stacked in sequence. Still further, the first active material layer at least contains one or more of graphite materials, silicon materials, and alloy materials, and the second active material layer at least contains one or more of graphite materials, silicon materials, and alloy materials. It can be understood that in the present disclosure, the first active material layer and the second active material layer are independent of each other, and their respective used components, component ratios, and layer thicknesses can be the same or different, which are not particularly limited.

In one of the embodiments, the electrode plate is an anode electrode plate.

(4) A battery, which includes the electrode plate as described above.

(5) An electric device, which includes the battery as described above. It can be understood that the electric device can be conventional electric devices in the art, including but not limited to digital products, lighting products, vehicles, etc.

The following embodiments are given to illustrate the present disclosure.

1. The test methods are as follows.

(1) Electron backscattered diffraction (EBSD) test: a C-Swift EBSD detector manufactured by Oxford Instruments in England was adopted to observe and characterize crystal structures of samples of various Embodiments and Comparative Embodiments. In order to clearly observe the grain boundary profile of a sample, a cross section of the sample was polished for 20 minutes with an ion miller in advance, with an observation magnification factor of 3,000, where n is total number of all grains observed in the field of view when examining the copper-foil cross section at the magnification factor of 3,000, a and b are the major radius and the minor radius of the fitted ellipse respectively, and $\phi_{ED}$ refers to an average value of principal diameters of the fitted ellipses of n grains detected in the field of view at the magnification factor of 3,000.

(2) Tensile strength and elongation test: a HY-0230 universal material testing machine manufactured by Shanghai Hengyi Precision Instrument Co., Ltd. was used to test the tensile strength and the elongation of the sample at room temperature and a strain rate of 50 mm/min according to the testing method of GB/T29847-2013. The tensile test sample was a strip sample, with a grip-to-grip distance of 50 mm. The sample was measured repeatedly ten times, with an average value being taken as the final tensile strength and elongation of the sample. Specifically, the measured tensile strength and elongation corresponded to the average of the transverse and longitudinal directions. Five copper-foil strips with dimensions of 15 mm × 100 mm were cut in the transverse direction and five in the longitudinal direction. The tensile strength and elongation of the samples were tested in a condition of room temperature and a strain rate of 50mm/min, and the final tensile strength and elongation values were obtained by averaging the results from all ten strips.

(3) Vickers hardness (HV) test: the Vickers hardness (HV) was tested according to the test method GB/T 4340.1-2009, and the Vickers hardness (HV) of the sample was tested at room temperature under a load of 50 g with a dwell time of5 s using a touch screen micro Vickers hardness tester manufactured by SHANGHAI TASO TESTING INTRUMENT CO., LTD. Five different positions of the sample are measured, and their average value is taken as the final Vickers hardness (HV) of the sample.

2. For parts of the embodiments which are not specified in terms of specific technology or conditions, they are carried out according to technology or conditions described in the literature in this art or according to the product specification. For reagents or instruments used which are not specified in terms of manufacturer, they are all conventional products commercially available on the market.

## Embodiment 1

Copper plates and copper wires with a purity of over 99.8% in a weight ratio of 1: 1 were taken as raw materials, high-temperature air was introduced, the raw materials were dissolved in a sulfuric acid solution to prepare copper sulfate electrolyte solution, and pure copper sulfate electrolyte solution was obtained by three-stage filtration. An insoluble material was taken as an anode and a cathode roller with a roller surface made of titanium was taken as a cathode. The lower semicircular portion of the cathode roller was immersed in the copper sulfate electrolyte solution in an electrolytic cell. Electrolysis was performed with a current of 35000 A and a constant rotation speed of the cathode roller. The copper sulfate electrolyte solution contains 85 g/L of $Cu^{2+}$, 105 g/L of sulfuric acid, 17 ppm of chloride ions and organic composite electrolyte additives. The brightener is composed of 40 ppm of SPS and 45 ppm of MPS, the throwing agent is composed of 10 ppm of PEG and 20 ppm of PVP, with a molecular weight of PEG being 4000, and the leveling agent is 5 ppm of gelatin, which were added to the copper sulfate electrolyte solution after dilution. Temperature of the electrolyte solution was 55°C, and it was supplied to an electrolytic system through a pipe at a bottom of the electrolytic cell at a flow rate of 43 $m^3$/h. The copper foil was continuously peeled off the cathode roller after the copper foil was rolled out of the electrolyte solution with a drum. The copper foil was then subjected to passivation treatment with passivating solutions containing chromic anhydride and glucose, drying and winding to generate a raw foil, and this raw foil was used as the copper foil for the lithium-ion battery.

Three rolls of 2000 m copper foil were produced in batches, and three full-width base-foil samples were taken and baked at 150°C for 10min, after which the tensile strength, elongation and hardness of the copper foil were tested. Test results are shown in Table 1.

For the first active material layer and the second active material layer in this embodiment, 96 parts by weight of commercially available natural graphite, 2 parts by weight of conductive carbon black, 1.5 parts by weight of styrene-butadiene rubber (SBR), 0.5 part by weight of carboxymethyl cellulose (CMC) and 210 parts by weight of deionized water were mixed into slurry, which was then coated on two opposite surfaces of the copper foil for the lithium-ion battery of this embodiment with a doctor blade, and anode electrode plates were obtained by calendering and slitting. The anode electrode plates were then wound together with the prepared cathode electrode plates in the sequence of cathode, separator, and anode to form 18650 single cells, which were placed in an oven and baked for 24 h, with water content of the anode electrode plates being less than 300 ppm. The electrolyte solution of the lithium secondary battery was injected into the prepared battery cells, and 18650 batteries with 10PCS capacity of 1.1 Ah were prepared after standing, formation and capacity grading. The batteries were charged at 4.2 V and discharged at 3.2 V at a charge-discharge rate of 1 C at room temperature (25°C), and after 3000 cycles of charging and discharging, the fully discharged batteries were disassembled, and the active material was removed from the electrode plates by dissolution in deionized water to obtain the cycled anode current collectors. After baking at 105°C for 10 min, samples were taken to measure their elongation. Test results are shown in Table 1.

## Embodiment 2

Copper plates and copper wires with a purity of over 99.8% in a weight ratio of 1: 1 were taken as raw materials, high-temperature air was introduced, the raw materials were dissolved in a sulfuric acid solution to prepare copper sulfate electrolyte solution, and pure copper sulfate electrolyte solution was obtained by three-stage filtration. An insoluble material was taken as an anode and a cathode roller with a roller surface made of titanium was taken as a cathode. The lower semicircular portion of the cathode roller was immersed in the copper sulfate electrolyte solution in an electrolytic cell. Electrolysis was performed with a current of 35000 A and a constant rotation speed of the cathode roller. The copper sulfate electrolyte solution contains 85 g/L of $Cu^{2+}$, 105 g/L of sulfuric acid, 17 ppm of chloride ions and organic composite electrolyte additives. The brightener is composed of 45 ppm of SPS and 40 ppm of MPS, the throwing agent is composed of 7 ppm of PEG and 25 ppm of PVP, with a molecular weight of PEG being 4000, and the leveling agent is 5 ppm of gelatin, which were added to the copper sulfate electrolyte solution after dilution. Temperature of the electrolyte solution was 55°C, and it was supplied to an electrolytic system through a pipe at a bottom of the electrolytic cell at a flow rate of 43 m$^3$/h. The copper foil was continuously peeled off the cathode roller after the copper foil was rolled out of the electrolyte solution with a drum. The copper foil was subjected to passivation treatment with passivating solutions containing chromic anhydride and glucose, drying and winding to generate a raw foil, and this raw foil was used as the copper foil for the lithium-ion battery.

Three rolls of 2000 m copper foil were produced in batches, and three full-width base-foil samples were taken and baked at 150°C for 10min, after which the tensile strength, elongation and hardness were tested. Test results are shown in Table 1.

For the first active material layer and the second active material layer in this embodiment, 96 parts by weight of commercially available natural graphite, 2 parts by weight of conductive carbon black, 1.5 parts by weight of styrene-butadiene rubber (SBR), 0.5 part by weight of carboxymethyl cellulose (CMC) and 210 parts by weight of deionized water were mixed into slurry, which was then coated on two opposite surfaces of the copper foil for the lithium-ion battery of this embodiment with a doctor blade, and anode electrode plates were obtained by calendering and slitting. The anode electrode plates were then wound together with the prepared cathode electrode plates in the sequence of cathode, separator, and anode to form 18650 single cells, which were placed in an oven and baked for 24 h, with water content of the anode electrode plates being less than 300 ppm. The electrolyte solution of the lithium secondary battery was injected into the prepared battery cells, and 18650 batteries with 10PCS capacity of 1.1 Ah were prepared after standing, formation and capacity grading. The batteries were charged at 4.2 V and discharged at 3.2 V at a charge-discharge rate of 1 C at room temperature (25°C), and after 3000 cycles of charging and discharging, the fully discharged batteries were disassembled, and the active material was removed from the electrode plates by dissolution in deionized water to obtain the cycled anode current collectors. After baking at 105°C for 10 min, samples were taken to measure their elongation. Test results are shown in Table 1.

**Embodiment 3**

Copper plates and copper wires with a purity of over 99.8% in a weight ratio of 1: 1 were taken as raw materials, high-temperature air was introduced, the raw materials were dissolved in a sulfuric acid solution to prepare copper sulfate electrolyte solution, and pure copper sulfate electrolyte solution was obtained by three-stage filtration. An insoluble material was taken as an anode and a cathode roller with a roller surface made of titanium was taken as a cathode. The lower semicircular portion of the cathode roller was immersed in the copper sulfate electrolyte solution in an electrolytic cell. Electrolysis was performed with a current of 35000 A and a constant rotation of the cathode roller. The copper sulfate electrolyte solution contains 85 g/L of Cu$^{2+}$, 105 g/L of sulfuric acid, 17 ppm of chloride ions and organic composite electrolyte additives. The brightener is composed of 45 ppm of SPS and 30 ppm of MPS, the throwing agent is composed of 7 ppm of PEG and 25 ppm of PVP, with a molecular weight of PEG being 4000, and the leveling agent is 10 ppm of gelatin, which were added to the copper sulfate electrolyte solution after dilution. Temperature of the electrolyte solution was 55°C, and it was supplied to an electrolytic system through a pipe at a bottom of the electrolytic cell at a flow rate of 43 m$^3$/h. The copper foil was continuously peeled off the cathode roller after the copper foil was rolled out of the electrolyte solution with a drum. The copper foil was subjected to passivation treatment with passivating solutions containing chromic anhydride and glucose, drying and winding to generate a raw foil, and this raw foil was used as the copper foil for the lithium-ion battery.

Three rolls of 2000 m copper foil were produced in batches, and three full-width base-foil samples were taken and baked at 150°C for 10min, after which the tensile strength, elongation and hardness were tested. Test results are shown in Table 1.

For the first active material layer and the second active material layer in this embodiment, 96 parts by weight of commercially available natural graphite, 2 parts by weight of conductive carbon black, 1.5 parts by weight of styrene-butadiene rubber (SBR), 0.5 part by weight of carboxymethyl cellulose (CMC) and 210 parts by weight of deionized water were mixed into slurry, which was then coated on two opposite surfaces of the copper foil for the lithium-ion battery of this embodiment with a doctor blade, and anode electrode plates were obtained by calendering and slitting. The anode electrode plates were then wound together with the prepared cathode electrode plates in the sequence of cathode, separator, and anode to form 18650 single cells, which were placed in an oven and baked for 24 h, with water content of the anode electrode plates being less than 300 ppm. The electrolyte solution of the lithium secondary battery was injected into the prepared battery cells, and 18650 batteries with 10PCS capacity of 1.1 Ah were prepared after standing, formation and capacity grading. The batteries were charged at 4.2 V and discharged at 3.2 V at a charge-discharge rate of 1 C at room temperature (25°C), and after 3000 cycles of charging and discharging, the fully discharged batteries were disassembled, and the active material was removed from the electrode plates by dissolution in deionized water to obtain the cycled anode current collectors. After baking at 105°C for 10 min, samples were taken to measure their elongation. Test results are shown in Table 1.

**Embodiment 4**

Copper plates and copper wires with a purity of over 99.8% in a weight ratio of 1: 1 were taken as raw materials, high-temperature air was introduced, the raw materials were dissolved in a sulfuric acid solution to prepare copper sulfate electrolyte solution, and pure copper sulfate electrolyte solution was obtained by three-stage filtration. An insoluble material was taken as an anode and a cathode roller with a roller surface made of titanium was taken as a cathode. The lower semicircular portion of the cathode roller was immersed in the copper sulfate electrolyte solution in an electrolytic cell. Electrolysis was performed with a current of 35000 A and a constant rotation speed of the cathode roller. The copper sulfate electrolyte solution contains 85 g/L of $Cu^{2+}$, 105 g/L of sulfuric acid, 17 ppm of chloride ions and organic composite electrolyte additives. The brightener is composed of 40 ppm of SPS and 40 ppm of UPS, the throwing agent is composed of 7 ppm of PEG and 20 ppm of PVP, with a molecular weight of PEG being 6000, and the leveling agent is 5 ppm of collagen, which were added to the copper sulfate electrolyte solution after dilution. Temperature of the electrolyte solution was 55°C, and it was supplied to an electrolytic system through a pipe at a bottom of the electrolytic cell at a flow rate of 43 $m^3$/h. The copper foil was continuously peeled off the cathode roller after the copper foil was rolled out of the electrolyte solution with a drum. The copper foil was then subjected to passivation treatment with passivating solutions containing chromic anhydride and glucose, drying and winding to generate a raw foil, and this raw foil was used as the copper foil for the lithium-ion battery.

Three rolls of 2000 m copper foil were produced in batches, and three full-width base-foil samples were taken and baked at 150°C for 10min, after which the tensile strength, elongation and hardness of the copper foil were tested. Test results are shown in Table 1.

For the first active material layer and the second active material layer in this embodiment, 96 parts by weight of commercially available natural graphite, 2 parts by weight of conductive carbon black, 1.5 parts by weight of styrene-butadiene rubber (SBR), 0.5 part by weight of carboxymethyl cellulose (CMC) and 210 parts by weight of deionized water were mixed into slurry, which was then coated on two opposite surfaces of the copper foil for the lithium-ion battery of this embodiment with a doctor blade, and anode electrode plates were obtained by calendering and slitting. The anode electrode plates were then wound together with the prepared cathode electrode plates in the sequence of cathode, separator, and anode to form 18650 single cells, which were placed in an oven and baked for 24 h, with water content of the anode electrode plates being less than 300 ppm. The electrolyte solution of the lithium secondary battery was injected into the prepared battery cells, and 18650 batteries with 10PCS capacity of 1.1 Ah were prepared after standing, formation and capacity grading. The batteries were charged at 4.2 V and discharged at 3.2 V at a charge-discharge rate of 1 C at room temperature (25°C), and after 3000 cycles of charging and discharging, the fully discharged batteries were disassembled, and the active material was removed from the electrode plates by dissolution in deionized water to obtain the cycled anode current collector. After baking at 105°C for 10 min, samples were taken to measure their elongation. Test results are shown in Table 1.

**Embodiment 5**

Copper plates and copper wires with a purity of over 99.8% in a weight ratio of 1: 1 were taken as raw materials, high-temperature air was introduced, the raw materials were dissolved in a sulfuric acid solution to prepare copper sulfate electrolyte solution, and pure copper sulfate electrolyte solution was obtained by three-stage filtration. An insoluble material was taken as an anode and a cathode roller with a roller surface made of titanium was taken as a cathode. The lower semicircular portion of the cathode roller was immersed in the copper sulfate electrolyte solution in an electrolytic cell. Electrolysis was performed with a current of 35000 A and a constant rotation speed of the cathode roller. The copper sulfate electrolyte solution contains 85 g/L of $Cu^{2+}$, 105 g/L of sulfuric acid, 17 ppm of chloride ions and organic composite electrolyte additives. The brightener is composed of 45 ppm of UPS and 40 ppm of ZPS, the throwing agent is composed of 5 ppm of PEG and 20 ppm of PVP, with a molecular weight of PEG being 8000, and the leveling agent is composed of 6 ppm of collagen and 3 ppm of gelatin, which were added to the copper sulfate electrolyte solution after dilution. Temperature of the electrolyte solution is 55°C, and it was supplied to an electrolytic system through a pipe at a bottom of the electrolytic cell at a flow rate of 43 $m^3$/h. The copper foil was continuously peeled off the cathode roller after the copper foil was rolled out of the electrolyte solution with a drum. The copper foil was then subjected to passivation treatment with passivating solutions containing chromic anhydride and glucose, drying and winding to generate a raw foil, and this raw foil was used as the copper foil for the lithium-ion battery.

Three rolls of 2000 m copper foil were produced in batches, and three full-width base-foil samples were taken and baked at 150°C for 10min, after which the tensile strength, elongation and hardness of the copper foil were tested. Test results are shown in Table 1.

For the first active material layer and the second active material layer in this embodiment, 96 parts by weight of commercially available natural graphite, 2 parts by weight of conductive carbon black, 1.5 parts by weight of styrene-butadiene rubber (SBR), 0.5 part by weight of carboxymethyl cellulose (CMC) and 210 parts by weight of deionized water were mixed into slurry, which was then coated on two opposite surfaces of the copper foil for the lithium-ion battery of this embodiment with a doctor blade, and anode electrode plates were obtained by calendering and slitting. The anode electrode plates were then wound together with the prepared cathode electrode plates in the sequence of cathode, separator, and anode to form 18650 single cells, which were placed in an oven and baked for 24 h, with water content of the anode electrode plates being less than 300 ppm. The electrolyte solution of the lithium secondary battery was injected into the prepared battery cells, and 18650 batteries with 10PCS capacity of 1.1 Ah were prepared after standing, formation and capacity grading. The batteries were charged at 4.2 V and discharged at 3.2 V at a charge-discharge rate of 1 C at room temperature (25°C), and after 3000 cycles of charging and discharging, the fully discharged batteries were disassembled, and the active material was removed from the electrode plates by dissolution in deionized water to obtain the cycled anode current collectors. After baking at 105°C for 10 min, samples were taken to measure their elongation. Test results are shown in Table 1.

**Embodiment 6**

Copper plates and copper wires with a purity of over 99.8% in a weight ratio of 1: 1 were taken as raw materials, high-temperature air was introduced, the raw materials were dissolved in a sulfuric acid solution to prepare copper sulfate electrolyte solution, and pure copper sulfate electrolyte solution was obtained by three-stage filtration. An insoluble material was taken as an anode and a cathode roller with a roller surface made of titanium was taken as a cathode. The lower semicircular portion of the cathode roller was immersed in the copper sulfate electrolyte solution in an electrolytic cell. Electrolysis was performed with a current of 35000 A and a constant rotation speed of the cathode roller. The copper sulfate electrolyte solution contains 85 g/L of $Cu^{2+}$, 105 g/L of sulfuric acid, 17 ppm of chloride ions and organic composite electrolyte additives. The brightener is composed of 45 ppm of ZPS and 35 ppm of MPS, the throwing agent is composed of 10 ppm of PEG and 15 ppm of PVP, with a molecular weight of PEG being 8000, and the leveling agent is 10 ppm of gelatin, which were added to the copper sulfate electrolyte solution after dilution. Temperature of the electrolyte solution was 55°C, and it was supplied to an electrolytic system through a pipe at a bottom of the electrolytic cell at a flow rate of 43 $m^3$/h. The copper foil was continuously peeled off the cathode roller after the copper foil was rolled out of the electrolyte solution with a drum. The copper foil was then subjected to passivation treatment with passivating solutions containing chromic anhydride and glucose, drying and winding to generate a raw foil, and this raw foil was used as the copper foil for the lithium-ion battery.

Three rolls of 2000 m copper foil were produced in batches, and three full-width base-foil samples were taken and baked at 150°C for 10min, after which the tensile strength, elongation and hardness of the copper foil were tested. Test results are shown in Table 1.

For the first active material layer and the second active material layer in this embodiment, 96 parts by weight of commercially available natural graphite, 2 parts by weight of conductive carbon black, 1.5 parts by weight of styrene-butadiene rubber (SBR), 0.5 part by weight of carboxymethyl cellulose (CMC) and 210 parts by weight of deionized water were mixed into slurry, which was then coated on two opposite surfaces of the copper foil for the lithium-ion battery of this embodiment with a doctor blade, and anode electrode plates were obtained by calendering and slitting. The anode electrode plates were then wound together with the prepared cathode electrode plates in the sequence of cathode, separator, and anode to form 18650 single cells, which were placed in an oven and baked for 24 h, with water content of the anode electrode plates being less than 300 ppm. The electrolyte solution of the lithium secondary battery was injected into the prepared battery cells, and 18650 batteries with 10PCS capacity of 1.1 Ah were prepared after standing, formation and capacity grading. The batteries were charged at 4.2 V and discharged at 3.2 V at a charge-discharge rate of 1 C at room temperature (25°C), and after 3000 cycles of charging and discharging, the fully discharged batteries were disassembled, and the active material was removed from the electrode plates by dissolution in deionized water to obtain the cycled anode current collectors. After baking at 105°C for 10 min, samples were taken to measure their elongation. Test results are shown in Table 1.

**Comparative Embodiment 1**

Copper plates and copper wires with a purity of over 99.8% in a weight ratio of 1: 1 were taken as raw materials, high-temperature air was introduced, the raw materials were dissolved in a sulfuric acid solution to prepare copper sulfate electrolyte solution, and pure copper sulfate electrolyte solution was obtained by three-stage filtration. An insoluble material was taken as an anode and a cathode roller with a roller surface made of titanium was taken as a cathode. The lower semicircular portion of the cathode roller was immersed in the copper sulfate electrolyte solution in an electrolytic cell. Electrolysis was performed with a current of 35000 A and a constant rotation speed of the cathode roller. The copper sulfate electrolyte solution contains 85 g/L of $Cu^{2+}$, 105 g/L of sulfuric acid, 17 ppm of chloride ions and organic composite electrolyte additives. The brightener is composed of 25 ppm of SPS and 20 ppm of MPS, the throwing agent is 30 ppm of PEG, with a molecular weight of PEG being 4000, and the leveling agent is 5 ppm of collagen, which were added to the copper sulfate electrolyte solution after dilution. Temperature of the electrolyte solution was 55°C, and it was supplied to an electrolytic system through a pipe at a bottom of the electrolytic cell at a flow rate of 43 m³/h. The copper foil was continuously peeled off the cathode roller after the copper foil was rolled out of the electrolyte solution with a drum. The copper foil was then subjected to passivation treatment with passivating solutions containing chromic anhydride and glucose, drying and winding to generate a raw foil, and this raw foil was used as the copper foil for the lithium-ion battery.

Three rolls of 2000 m copper foil were produced in batches, and three full-width base-foil samples were taken and baked at 150°C for 10min, after which the tensile strength, elongation and hardness were tested. Test results are shown in Table 1.

For the first active material layer and the second active material layer in this embodiment, 96 parts by weight of commercially available natural graphite, 2 parts by weight of conductive carbon black, 1.5 parts by weight of styrene-butadiene rubber (SBR), 0.5 part by weight of carboxymethyl cellulose (CMC) and 210 parts by weight of deionized water were mixed into slurry, which was then coated on two opposite surfaces of the copper foil for the lithium-ion battery of this embodiment with a doctor blade, and anode electrode plates were obtained by calendering and slitting. The anode electrode plates were then wound together with the prepared cathode electrode plates in the sequence of cathode, separator, and anode to form 18650 single cells, which were placed in an oven and baked for 24 h, with water content of the anode electrode plates being less than 300 ppm. The electrolyte solution of the lithium secondary battery was injected into the prepared battery cells, and 18650 batteries with 10PCS capacity of 1.1 Ah were prepared after standing, formation and capacity grading. The batteries were charged at 4.2 V and discharged at 3.2 V at a charge-discharge rate of 1 C at room temperature (25°C), and after 3000 cycles of charging and discharging, the fully discharged batteries were disassembled, and the active material was removed from the electrode plates by dissolution in deionized water to obtain the cycled anode current collectors. After baking at 105°C for 10 min, samples were taken to measure their elongation. Test results are shown in Table 1.

**Comparative Embodiment 2**

Copper plates and copper wires with a purity of over 99.8% in a weight ratio of 1: 1 were taken as raw materials, high-temperature air was introduced, the raw materials were dissolved in a sulfuric acid solution to prepare copper sulfate electrolyte solution, and pure copper sulfate electrolyte solution was obtained by three-stage filtration. An insoluble material was taken as an anode and a cathode roller with a roller surface made of titanium was taken as a cathode. The lower semicircular portion of the cathode roller was immersed in the copper sulfate electrolyte solution in an electrolytic cell. Electrolysis was performed with a current of 35000 A and a constant rotation speed of the cathode roller. The copper sulfate electrolyte solution contains 85 g/L of $Cu^{2+}$, 105 g/L of sulfuric acid, 17 ppm of chloride ions and organic composite electrolyte additives. The brightener is 85 ppm of SES, the throwing agent is composed of 10 ppm of PEG and 20 ppm of PVP, with a molecular weight of PEG being 4000, and the leveling agent is 7 ppm of Janus Green, which were added to the copper sulfate electrolyte solution after dilution. Temperature of the electrolyte solution was 55°C, and it was supplied to an electrolytic system through a pipe at a bottom of the electrolytic cell at a flow rate of 43 m³/h. The copper foil was continuously peeled off the cathode roller after the copper foil was rolled out of the electrolyte solution with a drum. The copper foil was then subjected to passivation treatment with passivating solutions containing chromic anhydride and glucose, drying and winding to generate a raw foil, and this raw foil was used as the copper foil for the lithium-ion battery.

Three rolls of 2000 m copper foil were produced in batches, and three full-width base-foil samples were taken and baked at 150°C for 10min, after which the tensile strength, elongation and hardness were tested. Test results are shown in Table 1.

For the first active material layer and the second active material layer in this embodiment, 96 parts by weight of commercially available natural graphite, 2 parts by weight of conductive carbon black, 1.5 parts by weight of styrene-butadiene rubber (SBR), 0.5 part by weight of carboxymethyl cellulose (CMC) and 210 parts by weight of deionized water were mixed into slurry, which was then coated on two opposite surfaces of the copper foil for the lithium-ion battery of this embodiment with a doctor blade, and anode electrode plates were obtained by calendering and slitting. The anode electrode plates were then wound together with the prepared cathode electrode plates in the sequence of cathode, separator, and anode to form 18650 single cells, which were placed in an oven and baked for 24 h, with water content of the anode electrode plates being less than 300 ppm. The electrolyte solution of the lithium secondary battery was injected into the prepared battery cells, and 18650 batteries with 10PCS capacity of 1.1 Ah were prepared after standing, formation and capacity grading. The batteries were charged at 4.2 V and discharged at 3.2 V at a charge-discharge rate of 1 C at room temperature (25°C), and after 3000 cycles of charging and discharging, the fully discharged batteries were disassembled, and the active material was removed from the electrode plates by dissolution in deionized water to obtain the cycled anode current collectors. After baking at 105°C for 10 min, samples were taken to measure their elongation. Test results are shown in Table 1.

**Comparative Embodiment 3**

Copper plates and copper wires with a purity of over 99.8% in a weight ratio of 1: 1 were taken as raw materials, high-temperature air was introduced, the raw materials were dissolved in a sulfuric acid solution to prepare copper sulfate electrolyte solution, and pure copper sulfate electrolyte solution was obtained by three-stage filtration. An insoluble material was taken as an anode and a cathode roller with a roller surface made of titanium was taken as a cathode. The lower semicircular portion of the cathode roller was immersed in the copper sulfate electrolyte solution in an electrolytic cell. Electrolysis was performed with a current of 35000 A and a constant rotation speed of the cathode roller. The copper sulfate electrolyte solution contains 85 g/L of $Cu^{2+}$, 105 g/L of sulfuric acid, 17 ppm of chloride ions and organic composite electrolyte additives. The brightener is composed of 60 ppm of SES and 20 ppm of ZPS, the throwing agent is 25 ppm of PVP, and the leveling agent is composed of 5 ppm of collagen and 5 ppm of Janus Green, which were added to the copper sulfate electrolyte solution after dilution. Temperature of the electrolyte solution was 55°C, and it was supplied to an electrolytic system through a pipe at a bottom of the electrolytic cell at a flow rate of 43 $m^3$/h. The copper foil was continuously peeled off the cathode roller after the copper foil was rolled out of the electrolyte solution with a drum. The copper foil was then subjected to passivation treatment with passivating solutions containing chromic anhydride and glucose, drying and winding to generate a raw foil, and this raw foil was used as the copper foil for the lithium-ion battery.
Three rolls of 2000 m copper foil were produced in batches, and three full-width base-foil samples were taken and baked at 150°C for 10min, after which the tensile strength, elongation and hardness were tested. Test results are shown in Table 1.
For the first active material layer and the second active material layer in this embodiment, 96 parts by weight of commercially available natural graphite, 2 parts by weight of conductive carbon black, 1.5 parts by weight of styrene-butadiene rubber (SBR), 0.5 part by weight of carboxymethyl cellulose (CMC) and 210 parts by weight of deionized water were mixed into slurry, which was then coated on two opposite surfaces of the copper foil for the lithium-ion battery of this embodiment with a doctor blade, and anode electrode plates were obtained by calendering and slitting. The anode electrode plates were then wound together with the prepared cathode electrode plates in the sequence of cathode, separator, and anode to form 18650 single cells, which were placed in an oven and baked for 24 h, with water content of the anode electrode plates being less than 300 ppm. The electrolyte solution of the lithium secondary battery was injected into the prepared battery cells, and 18650 batteries with 10PCS capacity of 1.1 Ah were prepared after standing, formation and capacity grading. The batteries were charged at 4.2 V and discharged at 3.2 V at a charge-discharge rate of 1 C at room temperature (25°C), and after 3000 cycles of charging and discharging, the fully discharged batteries were disassembled, and the active material was removed from the electrode plates by dissolution in deionized water to obtain the cycled anode current collectors. After baking at 105°C for 10 min, samples were taken to measure their elongation. Test results are shown in Table 1.

**Comparative Embodiment 4**

Copper plates and copper wires with a purity of over 99.8% in a weight ratio of 1: 1 were taken as raw materials, high-temperature air was introduced, the raw materials were dissolved in a sulfuric acid solution to prepare copper sulfate electrolyte solution, and pure copper sulfate electrolyte solution was obtained by three-stage filtration. An insoluble material was taken as an anode and a cathode roller with a roller surface made of titanium was taken as a cathode. The lower semicircular portion of the cathode roller was immersed in the copper sulfate electrolyte solution in an electrolytic cell. Electrolysis was performed with a current of 35000 A and a constant rotation speed of the cathode roller. The copper sulfate electrolyte solution contains 85 g/L of $Cu^{2+}$, 105 g/L of sulfuric acid, 17 ppm of chloride ions and organic composite electrolyte additives. The brightener is composed of 45 ppm of SPS and 35 ppm of SES, the throwing agent is 25 ppm of PEG, with a molecular weight of PEG being 4000, and the leveling agent is composed of 5 ppm of gelatin and 5 ppm of Janus Green, which were added to the copper sulfate electrolyte solution after dilution. Temperature of the electrolyte solution was 55°C, and it was supplied to an electrolytic system through a pipe at a bottom of the electrolytic cell at a flow rate of 43 $m^3$/h. The copper foil was continuously peeled off the cathode roller after the copper foil was rolled out of the electrolyte solution with a drum. The copper foil was then subjected to passivation treatment with passivating solutions containing chromic anhydride and glucose, drying and winding to generate a raw foil, and this raw foil was used as the copper foil for the lithium-ion battery.
Three rolls of 2000 m copper foil were produced in batches, and three full-width base-foil samples were taken and baked at 150°C for 10min, after which the tensile strength, elongation and hardness were tested. Test results are shown in Table 1.
For the first active material layer and the second active material layer in this embodiment, 96 parts by weight of commercially available natural graphite, 2 parts by weight of conductive carbon black, 1.5 parts by weight of styrene-butadiene rubber (SBR), 0.5 part by weight of carboxymethyl cellulose (CMC) and 210 parts by weight of deionized water were mixed into slurry, which was then coated on two opposite surfaces of the copper foil for the lithium-ion battery of this embodiment with a doctor blade, and anode electrode plates were obtained by calendering and slitting. The anode electrode plates were then wound together with the prepared cathode electrode plates in the sequence of cathode, separator, and anode to form 18650 single cells, which were placed in an oven and baked for 24 h, with water content of the anode electrode plates being less than 300 ppm. The electrolyte solution of the lithium secondary battery was injected into the prepared battery cells, and 18650 batteries with 10PCS capacity of 1.1 Ah were prepared after standing, formation and capacity grading. The batteries were charged at 4.2 V and discharged at 3.2 V at a charge-discharge rate of 1 C at room temperature (25°C), and after 3000 cycles of charging and discharging, the fully discharged batteries were disassembled, and the active material was removed from the electrode plates by dissolution in deionized water to obtain the cycled anode current collectors. After baking at 105°C for 10 min, samples were taken to measure their elongation. Test results are shown in Table 1.

Performance data of the above embodiments are shown in Table 1 below.

Table 1 Performance results of products of respective Embodiments and Comparative Embodiments

| Performance | | Embodiment 1 | Embodiment 2 | Embodiment 3 | Embodiment 4 | Embodiment 5 | Embodiment 6 | Comparative Embodiment 1 | Comparative Embodiment 2 | Comparative Embodiment 3 | Comparative Embodiment 4 |
|---|---|---|---|---|---|---|---|---|---|---|---|
| Copper foil for lithium-ion battery | Average $\Phi_{ED}$ ($\mu$m) | 1.19 | 1.28 | 1.16 | 1.23 | 1.16 | 1.20 | 1.41 | 1.47 | 1.57 | 1.50 |
| | Average $\Gamma_{GM}$ ($\mu$m) | 0.17 | 0.17 | 0.16 | 0.17 | 0.16 | 0.16 | 0.31 | 0.31 | 0.36 | 0.36 |
| | Proportion of twin boundary (%) | 67.11 | 69.07 | 71.32 | 69.21 | 70.87 | 69.99 | 60.33 | 60.45 | 61.45 | 60.74 |
| | Twinned grain region (%) | 97.38 | 98.16 | 97.52 | 97.71 | 97.56 | 98.04 | 94.4 | 94.9 | 95.1 | 94.7 |
| | Tensile strength (kgf/mm$^2$) | 35.9 | 36.0 | 36.5 | 37.3 | 36.6 | 36.5 | 39.6 | 38.3 | 37.5 | 36.7 |
| | Elongation (%) | 17.1 | 16.1 | 15.9 | 15.4 | 15.9 | 16.1 | 6.7 | 7.3 | 7.7 | 7.8 |
| | Vickers hardness (Hv) | 49.7 | 49.9 | 50.3 | 51.2 | 50.3 | 50.5 | 51.5 | 51.1 | 51.2 | 50.6 |
| | $\Psi$ | 2.91 | 3.10 | 3.16 | 3.32 | 3.16 | 3.14 | 7.68 | 7.00 | 6.65 | 6.49 |
| Anode current collector | Elongation (%) | 5.1 | 4.7 | 4.7 | 3.7 | 4.6 | 4.2 | 2.6 | 2.9 | 3.1 | 3.1 |
| | Whether wrinkling/breaking occurs after charging and discharging cycles | No | No | No | No | No | No | Yes | No | No | Yes |

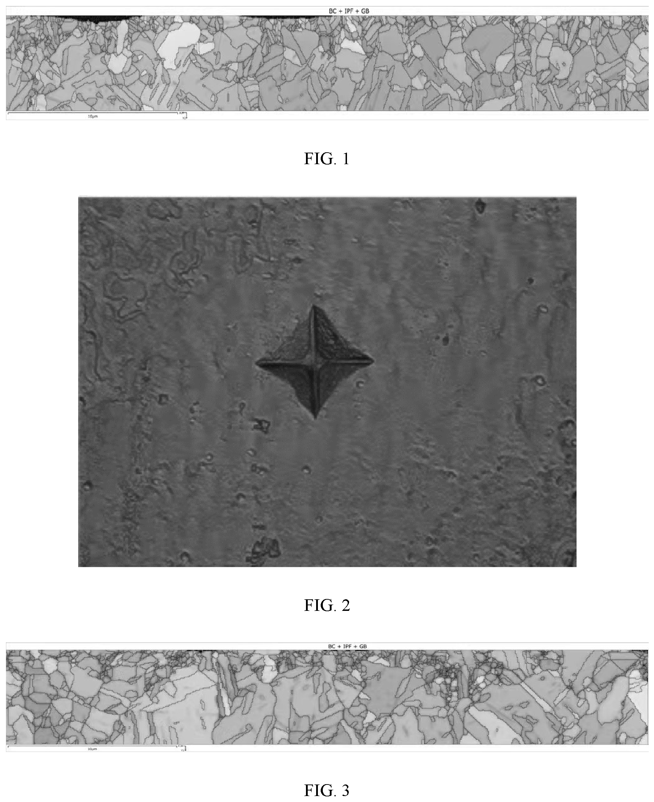

FIG. 1 is an EBSD photograph of a section of the copper foil prepared in Embodiment 1. It can be seen from FIG. 1 that there are large twin grain regions and a small difference in grain size, thus grain boundaries can effectively block dislocation motion, resulting in high elongation.

FIG. 2 is a photograph of hardness indentation on a first glossy surface of the copper foil prepared in Embodiment 2. It can be seen from FIG. 2 that the indentation has a rectangular shape, and the relatively short indentation diagonals indicate a high hardness.

FIG. 3 is an EBSD photograph of a section of the copper foil prepared in Comparative Embodiment 1. It can be seen from FIG. 3 that there is a large difference in grain size, a large number of fine grains exist locally, and grain boundary density is too large, which is easy to form strain concentration and develop into cracks, resulting in low elongation.

To sum up, the copper foil according to the present disclosure has a moderate grain size, good uniformity, moderate grain boundary density, both high tensile strength and high elongation, and high hardness, which can reduce breakage and/or wrinkling in a process of manufacturing the copper foil and/or in a process of manufacturing and using battery cells, and improve cycle performance and safety of the battery.

The technical features of the above-mentioned embodiments can be combined in an arbitrary manner. For simplicity of description, not all of the possible combinations of the technical features in the embodiments described above are described, however, as long as there is no contradiction between these combinations of the technical features, the combinations should be considered as falling within the scope of this specification.

The above described embodiments only express several implementations of the present disclosure, and their descriptions are more specific and detailed, however, they should not be construed as limiting the scope of the present disclosure. It should be noted that several modifications and improvements can be made by those of ordinary skill in the art without departing from the concept of the present disclosure, which shall also belong to the protection scope of the present disclosure. Therefore, the protection scope of this disclosure shall be subject to the appended claims.

## Claims

1. A copper foil, comprising a first surface and a second surface which are opposite to each other, wherein a glossiness of the first surface is expressed as Gs1, and a glossiness of the second surface is expressed as Gs2, wherein GS1 is greater than GS2, and a principal diameter of a fitted ellipse of a grain in a sectional crystal structure between the first surface and the second surface is expressed as $\Phi_{ED}$, wherein $\Phi_{ED}$ satisfies :

$$\Phi_{ED} = 2 * sqrt(a^2 + b^2),$$

   and $\Phi_{ED}$ is 0.1 $\mu$m to 6.5 $\mu$m; and
   wherein a and b are a major radius and a minor radius of the fitted ellipse, respectively.

2. The copper foil according to claim 1, wherein a uniformity of a grain structure in the copper foil is expressed as $\Gamma_{GM}$, and $\Gamma_{GM}$ satisfies:

$$\Gamma_{GM} = \sum_{i=1}^{n} \frac{\pi ab}{2n(\pi b + 2a - 2b)},$$

   and $\Gamma_{GM}$ is 0.04 $\mu$m to 0.30 $\mu$m;
   wherein n is the number of grains.

3. The copper foil according to claim 1, wherein the copper foil satisfies one or more of the following:

   (1) a proportion of twin grain boundaries in a grain structure of the copper foil is 55% to 75%; and
   (2) a proportion of twin grain regions in the grain structure of the copper foil is greater than or equal to 95%.

4. The copper foil according to any one of claims 1 to 3, wherein the copper foil satisfies one or more of the following:

   (1) a tensile strength of the copper foil is 30 kgf/mm$^2$ to 40 kgf/mm$^2$ at room temperature;
   (2) an elongation at break of the copper foil is greater than or equal to 8% at room temperature.

5. The copper foil according to any one of claims 1 to 3, wherein a numerical ratio of Vickers hardness to elongation at break of the copper foil is expressed as $\psi$, wherein $\psi$ is smaller than 10.

6. A preparation method of the copper foil according to any one of claims 1 to 5, comprising: preparing the copper foil by an electrolytic method,
   wherein an electrolyte solution adopted in the electrolytic method comprises:

   70 g/L to 110 g/L of copper ions, 90 g/L to 130 g/L of sulfuric acid, 10 ppm to 30 ppm of chloride ions, 10 ppm to 90 ppm of a brightener, 2 ppm to 25 ppm of a leveling agent, and 1 ppm~40 ppm of a throwing agent; and
   wherein the brightener comprises a compound with a sulfur-containing group, the leveling agent comprises a nitrogen-containing compound, and the throwing agent comprises a polyether compound and a nitrogen-containing heterocyclic compound.

7. The preparation method according to claim 6, wherein the preparation method satisfies one or more of the following:

   (1) the compound with the sulfur-containing group comprises one or more of bis-(sodium sulfopropyl)-disulfide, sodium 3-mercapto-1-propanesulphonate, isothiourea-propane sulfonate, and sodium 3-(benzothiazol-2-ylthio)-1-propanesulfonate;
   (2) the nitrogen-containing compound comprises one or more of collagen, gelatin, 2-amino-4-methylbenzothiazole, and 2-mercaptopyridine;
   (3) the throwing agent consists of the polyether compound and the nitrogen-containing heterocyclic compound in a concentration ratio of 1: (1 to 5);
   (4) the polyether compound comprises one or more of polyethylene glycol and polypropylene glycol; and
   (5) the nitrogen-containing heterocyclic compound comprises polyvinylpyrrolidone.

8. The preparation method according to claim 6 or 7, wherein the preparation method satisfies one or more of the following:

   (1) a temperature of the electrolyte solution is 40°C to 70 °C; and
   (2) an applied current is 15,000 to 60,000 A during an electrolytic process.

9. A copper foil for a lithium-ion battery, comprising the copper foil according to any one of claims 1 to 5 or a copper foil prepared according to the preparation method of the copper foil according to any one of claims 6 to 8.

10. A current collector, comprising the copper foil for the lithium-ion battery according to claim 9.

11. An electrode plate, comprising the current collector according to claim 10.

12. A battery, comprising the electrode plate according to claim 11.

13. An electric device, comprising the battery according to claim 12.

FIG. 1

FIG. 2

FIG. 3

## INTERNATIONAL SEARCH REPORT

| International application No. |
| --- |
| **PCT/CN2024/129788** |

**A.    CLASSIFICATION OF SUBJECT MATTER**

C25D1/04(2006.01)i;  C25D3/38(2006.01)i;  H01M 4/66(2006.01)i;  H01M10/052(2010.01)i

According to International Patent Classification (IPC) or to both national classification and IPC

**B.    FIELDS SEARCHED**

Minimum documentation searched (classification system followed by classification symbols)

IPC:C25D;  H01M

Documentation searched other than minimum documentation to the extent that such documents are included in the fields searched

Electronic data base consulted during the international search (name of data base and, where practicable, search terms used)

CNTXT, ENTXTC, VEN, ENTXT, CJFD, CNKI, web of science: 九江德福, 占俊雄, 罗佳, 楚常顺, 江洪, 文敏, 周祥祥, 李晶, 双晶, 双生晶, 晶粒, 颗粒, 铜粒, 微粒, 微晶, 椭圆, 拟合, 电解, 铜箔, 生箔, 合金箔, 金属箔, EBSD, EBSP, 背散射衍射, 粒径, 直径, 半径, 长轴, 短轴, 长度, 尺寸, 聚二硫二丙烷磺酸钠, SPS, 3-巯基-1-丙烷磺酸钠, MPS, 异硫脲丙烷磺酸内盐, UPS, "3-(苯并噻唑-2-巯基)-丙烷磺酸钠", ZPS, 胶原蛋白, 明胶, 2-氨基-4-甲基苯并噻唑, 2-巯基吡啶, 聚乙二醇, PEG, 聚丙二醇, PPG, 聚乙烯吡咯烷酮, PVP, 延伸率, 伸长率, 抗拉强度, 拉伸强度, 硬度 , twin-crystal, twin crystal, crystal+, grain+, particle+, granul+, ellip+, oval, electroly+, copper foil+, cu foil+, diameter, size, +propanesulfonic, collagen, gelatin, polyethylene glycol, polypropylene glycol, polyvinylpyrrolidone, elongation, tensile strength, hardness.

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2024124374 A1 (INSTITUTE OF CORROSION SCIENCE AND TECHNOLOGY) 20 June 2024 (2024-06-20)<br>description, paragraphs 8-142 | 1, 3-13 |
| X | CN 114908386 A (JIANGXI UNIVERSITY OF SCIENCE AND TECHNOLOGY et al.) 16 August 2022 (2022-08-16)<br>embodiment 4, and description, paragraphs 11-25 | 1, 3-13 |
| A | JP 2015045092 A (JX NIPPON MINING & METALS CORP.) 12 March 2015 (2015-03-12)<br>entire document | 1-13 |
| A | CN 101669237 A (NIPPON MINING & METALS CO., LTD.) 10 March 2010 (2010-03-10)<br>entire document | 1-13 |

☐ Further documents are listed in the continuation of Box C.    ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **20 July 2025** | **24 July 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/129788**

| Patent document cited in search report | | | Publication date (day/month/year) | Patent family member(s) | | | Publication date (day/month/year) |
|---|---|---|---|---|---|---|---|
| WO | 2024124374 | A1 | 20 June 2024 | None | | | |
| CN | 114908386 | A | 16 August 2022 | CN | 114908386 | B | 28 May 2024 |
| JP | 2015045092 | A | 12 March 2015 | JP | 5941959 | B2 | 29 June 2016 |
| CN | 101669237 | A | 10 March 2010 | WO | 2008132987 | A1 | 06 November 2008 |
| | | | | KR | 20090125823 | A | 07 December 2009 |
| | | | | KR | 101108911 | B1 | 31 January 2012 |
| | | | | JP | 5351012 | B2 | 27 November 2013 |
| | | | | US | 2010136434 | A1 | 03 June 2010 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *GB/T29847-2013*

- *GB/T 4340.1-2009*